# EUROPEAN PATENT APPLICATION

(11) **EP 1 613 026 A1**
(43) Date of publication of application: **04.01.2006**
(21) Application number: 04706861.4
(22) Date of filing: 30.01.2004
(51) Int. Cl.: H04M 1/02, H04M 1/21, H05K 5/00, G03B 17/02, G03B 17/04

(54) **PORTABLE TERMINAL**

(30) Priority: 07.03.2003 JP 2003061851
(71) Applicant: MATSUSHITA ELECTRIC INDUSTRIAL CO., LTD., Kadoma-shi, Osaka 571-8501 (JP)
(72) Inventor: TANIGUCHI, Koji, Yokohama-shi, Kanagawa 223-0053 (JP); SAKAMOTO, Kenichi, Osaka 560-0003 (JP)
(74) Representative: Grünecker, Kinkeldey, Stockmair & Schwanhäusser Anwaltssozietät
(86) International application number: PCT/JP2004/000931
(87) International publication number: WO 2004/080039

(57) **Abstract**

An object of the invention is to provide a slide-type mobile terminal having two slidable housings wherein a predetermined component mounted on one housing can be mounted without being limited by the thickness of the one housing.

A mobile terminal includes an upper housing (1) and a lower housing (2) that can be mutually slid for enabling the mobile terminal to enter either of a closed state in which the upper housing (1) and the lower housing (2) overlap each other as a whole and an open state in which the upper housing (1) is slid with respect to the lower housing (2) from the closed state. The upper housing (1) has a camera section (6) having one part projected to the lower housing (2) and a different part embedded in the upper housing (1). The lower housing (2) has a concave part that can house the convex part of the camera section (6) when the mobile terminal is placed in the closed state from the open state.

## Description

### <Technical Field>

This invention relates to a slide-type mobile terminal having two slidable housings wherein a predetermined component mounted on one housing can be mounted without being limited by the thickness of the one housing.

### <Background Art>

Hitherto, a camera using a solid-state image pickup device of CMOS type, CCD type, etc., has been installed in some mobile terminals of a mobile telephone, a PDA, etc. However, the camera installed in the mobile terminal in the related art often adopts a unifocal (fixed-focal-length) optical system and generally proper focus can be attained in the range from a predetermined image pickup distance to an infinite distance according to a pan focus system.

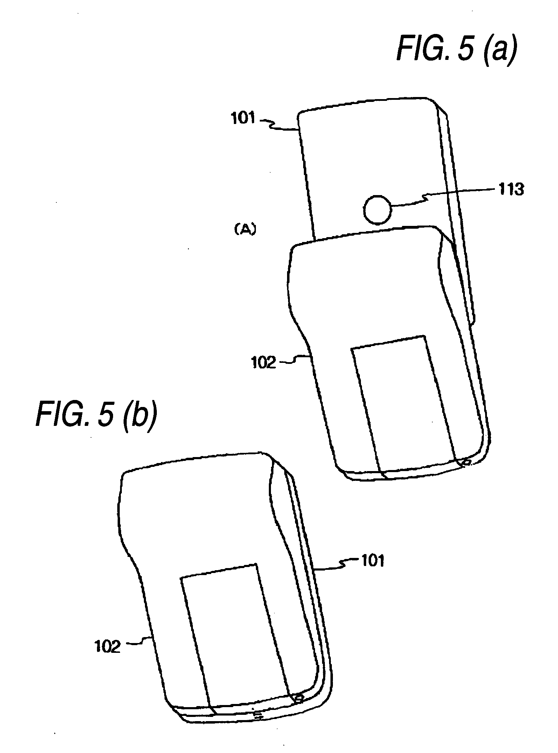

Such a mobile terminal with a camera in the related art is, for example, as shown in FIG. 5. (Refer to patent document 1.) FIG. 5 is a rear view of a mobile terminal with a camera in the related art. The mobile terminal with a camera in the related art shown in FIG. 5 is made up of an upper housing 101 and a lower housing 102 which are slidable with each other, and a camera 113 is installed in the upper housing 101. Since the housings of the mobile terminal with the camera also overlap each other as shown in FIG. 5 (B), the camera 113 is installed so that it does not project from the rear of the upper housing 101, namely, the face opposed to the lower housing 102 and has a lens exposed from the rear as shown in FIG. 5 (A). Since a structure wherein the camera 113 is projected even from any other face than the rear is not desirable from the viewpoint of the design, the camera 113 is completely embedded in the upper housing 101 except for the lens.

### (Patent document 1) JP-A-2000-78254

Thus, in the mobile terminal with the camera in the related art described above, the camera 113 is embedded in the upper housing 101 and therefore needs to be a size in which the camera 113 can be embedded in the upper housing 101. However, a high-performance, high-function camera adopting an optical zoom, a high-pixel image pickup device, a mechanical shutter, etc., generally is larger than a camera adopting a unifocal optical system in the related art and thus may be unable to be housed in the housing. Therefore, the performance and the function of the camera are limited by the size of the camera and the thickness of the housing of the camera; this is a problem.

It is therefore an object of the invention to provide a slide-type mobile terminal having two slidable housings wherein a predetermined component mounted on one housing can be mounted without being limited by the thickness of the one housing.

### <Disclosure of the Invention>

To the end, according to the invention, there is provided a mobile terminal of slide type including a first housing and a second housing that can be mutually slid for enabling the mobile terminal to enter either of a closed state in which the first housing and the second housing overlap each other as a whole and an open state in which the first housing is slid with respect to the second housing from the closed state, wherein the first housing has a predetermined component made up of a convex part projected from a face opposed to the second housing in the closed state and a embedded part embedded in the first housing, and wherein the second housing has a concave part that can house the convex part when the mobile terminal is placed in the closed state from the open state. Thus, although one part of the predetermined component is projected from the face of the first housing opposed to the second housing, the mobile terminal can be placed in the closed state in which the one part projected is housed in the concave part. Therefore, the predetermined component mounted on the first housing can be mounted without being limited by the thickness of the first housing.

Preferably, in the mobile terminal according to the invention, the predetermined component is imaging means for imaging a subject.

Further, in the mobile terminal according to the invention, a lens or a lens protection cover is exposed from the convex part of the imaging means and the concave part has cleaning means for wiping dirt at a position coming in contact with the lens or the lens protection cover when the first housing is slid with respect to the second housing. Therefore, as the first housing is slid with respect to the second housing, the cleaning means wipes dirt deposited on the lens or the lens protection cover of the cleaning means, so that the lens or the lens protection cover can be kept clean.

### <Brief Description of the Drawings>

FIG. 1 is a perspective view of a mobile terminal of a first embodiment according to the invention,
FIG. 2 is a side view of the mobile terminal of the first embodiment according to the invention,
FIG. 3 is a perspective view of a mobile terminal of a second embodiment according to the invention,
FIG. 4 is a side view of the mobile terminal of the second embodiment according to the invention, and
FIG. 5 is a rear view of a mobile terminal in a related art.

In the figures, numeral 1 denotes an upper housing, numerals 2 and 20 denote each a lower housing, 3 denotes a liquid crystal display section, numeral 4 denotes a character input keypad, numeral 5 denotes a direction input keypad, numeral 6 denotes a camera section, numeral 11 denotes a camera section housing concave part, and numeral 28 denotes a nonwoven fabric.

### <Best Mode for Carrying out the Invention>

Embodiments of a mobile terminal according to the invention will be discussed in detail in the order of (First embodiment) and (Second embodiment) with reference to the accompanying drawings. In the description to follow, the mobile terminal of each of the first and second embodiments is assumed to be a communication terminal such as a mobile telephone, a PHS, or a PDA having an image pickup function for imaging a subject and capable of making voice conversation and conducting data communications of text data, image data, etc.

### (First embodiment)

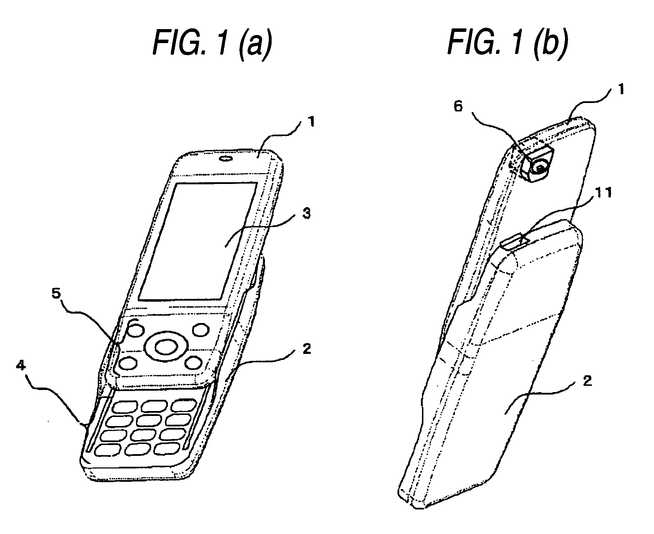

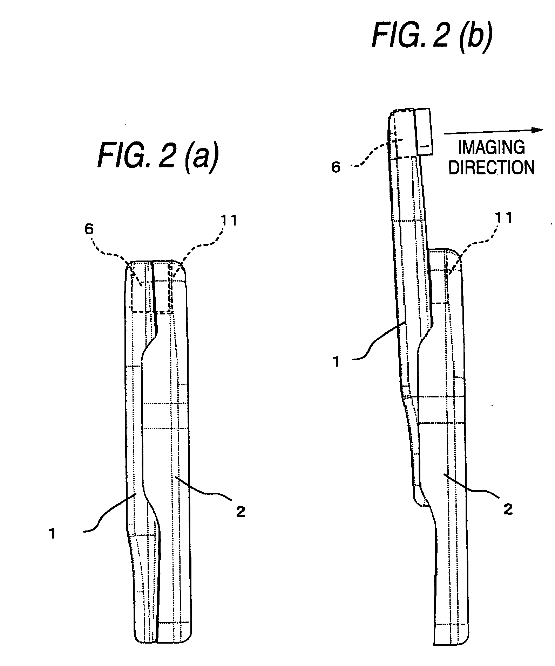

To begin with, the mobile terminal of the first embodiment according to the invention will be discussed with reference to FIGS. 1 and 2.

FIG. 1 is a perspective view of the mobile terminal of the first embodiment according to the invention, and FIG. 2 is a side view of the mobile terminal of the first embodiment according to the invention. FIG. 1 (a) is a perspective view of viewing the mobile terminal of the first embodiment from the front direction, and FIG. 1 (b) is a perspective view of viewing the mobile terminal of the first embodiment from the rear direction.

As shown in FIG. 1, the mobile terminal of the embodiment is made up of an upper housing 1 corresponding to a first housing in Claims and a lower housing 2 corresponding to a second housing in Claims. The upper housing 1 has a liquid crystal display 3 and a direction input keypad 5 on the front and has a camera section 6 corresponding to a predetermined component in Claims at the rear. The lower housing 2 has a character input keypad 4 and a camera section housing concave part 11 corresponding to a concave part in Claims on the front.

The upper housing 1 and the lower housing 2 are joined slidably with each other by a slide structure (not shown) provided in the length direction of the side, enabling the mobile terminal to enter either of two states. The two states are a state in which the upper housing 1 and the lower housing 2 overlap each other roughly as a whole as shown in FIG. 2 (a), which will be hereinafter referred to as "closed state," and a state in which the upper housing 1 is slid upward with respect to the lower housing 2 from the closed state as shown in FIG. 2 (b), which will be hereinafter referred to as "open state."

The components of the upper housing 1 will be discussed below:

To begin with, the camera section 6 images a subject in response to operation performed on the direction input keypad 5 or the character input keypad 4 and has one part projected from the face (rear) of the upper end of the upper housing 1 opposed to the lower housing 2 and a different part embedded in the upper housing 1. The part of the camera section 6 projected from the face opposed to the lower housing 2 will be hereinafter referred to as "convex part of the camera section 6." The convex part of the camera section 6 corresponds to a convex part in Claims, and the different part of the camera section 6 embedded in the upper housing 1 correspond to a embedded part in Claims.

Since the camera section 6 is provided in the upper end of the upper housing 1, the user can image a subject simply by sliding the upper housing 1 slightly with respect to the lower housing 2 in the closed state. The camera section 6 is provided in the proximity of a handset (not shown) installed in the upper housing 1, but the camera section 6 and the handset have no effect on each other. An exposed lens is placed in the convex part of the camera section 6. However, a lens protection cover to protect the lens may be provided.

The liquid crystal display 3 is installed exposed to the front of the upper housing 1 for displaying an image imaged by the camera section 6, etc. The direction input keypad 5 is provided for the user to operate the mobile terminal of the embodiment; particularly the user can operate the direction input keypad 5 to release a shutter of the camera section 6.

Next, the components of the lower housing 2 will be discussed below:

To begin with, the camera section housing concave part 11 is a concave part provided in the upper end of the lower housing 2 and shaped so as to be able to house the convex part of the camera section 6 when the mobile terminal of the embodiment is slid from the open state to the closed state. That is, the camera section housing concave part 11 is shaped meeting the shape of the convex part of the camera section 6. The character input keypad 4 is provided for the user to operate the mobile terminal of the embodiment; particularly the user can operate the character input keypad 4 to release the shutter of the camera section 6.

In the mobile terminal including the components described above, although one part of the camera section 6 is projected from the face of the upper housing 1 opposed to the lower housing 2, since the lower housing 2 is formed with the camera section housing concave part 11, the convex part of the camera section 6 is housed in the camera section housing concave part 11 in the closed state as shown in FIG. 2 (a). On the other hand, the lens of the camera section 6 is exposed in the open state in which the upper housing 1 is slid upward with respect to the lower housing 2 as shown in FIG. 2 (b). Thus, the user can image a subject by aiming the rear of the mobile terminal at the subject and operating the direction input keypad 5 or the character input keypad 4 while checking a display screen of the liquid crystal display 3.

As described above, in the mobile terminal of the embodiment, the lower housing 2 is formed with the camera section housing concave part 11, so that the mobile terminal can be placed in the closed state in which the convex part of the camera section 6 is housed in the camera section housing concave part 11 although one part of the camera section 6 is projected from the face of the upper housing 1 opposed to the lower housing 2. Therefore, the size of the camera section 6 is not limited to the size in which the camera section 6 can be embedded in the upper housing 1 and thus a camera of any desired size can be installed in the upper housing 1 if the size is less than the thickness resulting from overlapping the upper housing 1 and the lower housing 2. Consequently, it is made possible to install a high-performance, high-function camera adopting an optical zoom, a high-pixel image pickup device, a mechanical shutter, etc.

Since it is not necessary to upsize the upper housing 1 meeting the size of the camera, the cost can be reduced. Further, it is not necessary to develop a high-performance, high-function camera of a size in which the camera can be embedded in the upper housing 1 and therefore the cost can be reduced. In the mobile terminal having a slide structure in the related art, a gap existing in the slide structure is amplified and a large gap easily occurs in the upper and lower end parts of the upper housing 1 and the lower housing 2. In the mobile terminal of the embodiment, however, the convex part of the camera section 6 is fitted into the camera section housing concave part 11 in the closed state, so that such a gap can also be decreased.

The embodiment has been described by taking as an example the case where one part of the camera section 6 is projected from the upper housing 1 and the lower housing 2 is formed with the camera section housing concave part 11 matching the convex part of the camera section 6. However, one part of any other component such as a display of a liquid crystal panel, etc., an antenna, or a speaker may be projected from the upper housing 1 and the lower housing 2 may be formed with a concave part matching the shape of the projection.

### (Second embodiment)

In the mobile terminal of the first embodiment, the camera section 6 is housed in the camera section housing concave part 11 in the closed state, so that dirt of dust, etc., or a scratch is hard to be deposited on the lens, etc. However, in the open state, it is feared that dirt of dust, etc., may be deposited on the lens, etc. Thus, in the second embodiment, a mobile terminal for making it possible to remove dirt deposited on a lens for keeping the lens clean will be discussed.

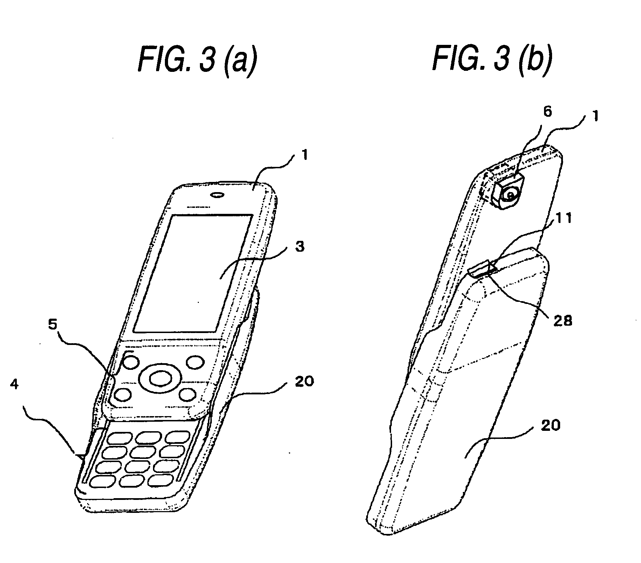

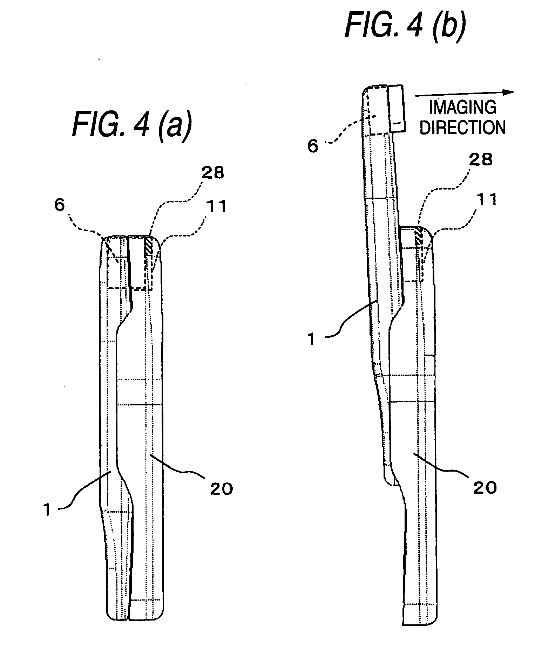

The mobile terminal of the second embodiment according to the invention will be discussed with reference to FIGS. 3 and 4. FIG. 3 is a perspective view of the mobile terminal of the second embodiment according to the invention, and FIG. 4 is a side view of the mobile terminal of the second embodiment according to the invention. FIG. 3 (a) is a perspective view of viewing the mobile terminal of the second embodiment from the front direction, and FIG. 3 (b) is a perspective view of viewing the mobile terminal of the second embodiment from the rear direction. FIG. 4 (a) is a side view of the mobile terminal of the second embodiment in a closed state, and FIG. 4 (b) is a side view of the mobile terminal of the second embodiment in an open state. Parts identical with those previously described with reference to FIGS. 1 and 2 (first embodiment) are denoted by the same reference numerals in FIGS. 3 and 4 and will not be discussed again.

As shown in FIG. 3, the mobile terminal of the embodiment is made up of an upper housing 1 and a lower housing 20. The lower housing 20 has a nonwoven fabric 28 corresponding to cleaning means in Claims in addition to the components of the lower housing 2 of the first embodiment. The nonwoven fabric 28 is put in the range from the upper end of the face of the inner wall of a camera section housing concave part 11 opposed to a lens of a camera section 6 in a closed state to the vicinity of the center, as shown in FIG. 4. When each housing is slid, the nonwoven fabric 28 comes in contact with the lens of the camera section 6 for wiping dirt of dust, etc., deposited on the lens.

Therefore, according to the mobile terminal of the embodiment, the user slides the upper housing 1 and the lower housing 20 for placing the mobile terminal in an open state or the closed state, thereby causing the nonwoven fabric 28 to wipe dirt deposited on the lens of the camera section 6, so that the lens of the camera section 6 can be kept clean.

The embodiment has been described by taking the nonwoven fabric 28 as an example, but a material having a cleaning property, such as a chemical synthesis fabric, may be adopted. The nonwoven fabric 28 may be put on the full face of the inner wall of the camera section housing concave part 11 opposed to the lens of the camera section 6 in the closed state.

While the invention has been described in detail with reference to the specific embodiment, it will be obvious to those skilled in the art that various changes and modifications can be made without departing from the spirit and the scope of the invention.

The present application is based on Japanese Patent Application No. 2003-061851 filed on March 7, 2003, which is incorporated herein by reference.

### <Industrial Applicability>

As described above, according to the invention, there can be provided the slide-type mobile terminal having the two slidable housings wherein the predetermined component mounted on one housing can be mounted without being limited by the thickness of the one housing.

## Claims

1. A mobile terminal of slide type comprising a first housing and a second housing that can be mutually slid for enabling the mobile terminal to enter either of a closed state in which the first housing and the second housing overlap each other as a whole and an open state in which the first housing is slid with respect to the second housing from the closed state;
wherein the first housing has a predetermined component comprising a convex part projected from a face opposed to the second housing in the closed state and a embedded part embedded in the first housing; and
the second housing has a concave part that can house the convex part when the mobile terminal is placed in the closed state from the open state.

2. The mobile terminal according to claim 1, wherein the predetermined component is imaging means for imaging a subject.

3. The mobile terminal according to claim 2 wherein a lens or a lens protection cover is exposed from the convex part of the imaging means and wherein
the concave part has cleaning means for wiping dirt at a position coming in contact with the lens or the lens protection cover when the first housing is slid with respect to the second housing.
